# EUROPEAN PATENT APPLICATION

(11) **EP 3 608 573 A1**
(43) Date of publication of application: **12.02.2020**
(21) Application number: 19189027.6
(22) Date of filing: 30.07.2019
(51) Int. Cl.: F16L 19/10

(54) **TUBE FITTING ASSEMBLY**

(30) Priority: 06.08.2018 US 201862714927 P; 19.07.2019 US 201916516486
(71) Applicant: Circor International, Inc., Burlington, Massachusetts 01803-4232 (US)
(72) Inventor: MCENTYRE, Richard, Greer, SC South Carolina 29650 (US); JACKSON, Kent, Inman, SC South Carolina 29349 (US)
(74) Representative: Prinz & Partner mbB

(57) **Abstract**

A fitting assembly (10) including a tube (20), a fitting body (12), a threaded drive nut (22), and at least one ferrule (28, 30). An engagement indicator member (48) is adapted to engage a corresponding engagement indicator member (60) for indicating a correct installation of the fitting assembly (10), the engagement indicator member (48) having a body having a geometry adapted to be rotatably received or non-rotatably received by one of the fitting body (12) or the drive nut (22).

## Description

### FIELD OF THE INVENTION

The present invention is directed to tube fitting assemblies, and more specifically to tube fitting assemblies and method for indicating a correct installation of the tube fitting assemblies by hand and without tools or gauges.

### BACKGROUND OF THE INVENTION

Tubing systems widely utilize ferruled-type compression fittings, such as dual ferruled-type compression fittings to transport fluid media. Unfortunately, these fittings are prone to improper installation, and post-installation inspection can be difficult to perform and costly.

What is needed is a fitting assembly installation that does not suffer from these drawbacks.

### SUMMARY OF THE INVENTION

The present invention relates to a fitting assembly including a fitting body for receiving a tube having an outer diameter, a threaded drive nut comprising a drive surface and receivable over the outer diameter of the tube, a first ferrule receivable over the outer diameter of the tube, the first ferrule having a first driven end and a first driving end, and a second ferrule receivable over the outer diameter of the tube, the second ferrule having a second driven end and a second driving end. The fitting assembly further includes the drive nut surface engaging the first driven end of the first ferrule, the first driving end engaging the second driven end of the second ferrule, and the second driving end engaging the outer diameter of the tube and the fitting body during assembly of the fitting assembly. The fitting assembly further includes an engagement indicator member adapted to engage a corresponding engagement indicator member for indicating a correct installation of the fitting assembly by hand and without tools or gauges, the engagement indicator member having a body having a geometry adapted to be rotatably received or non-rotatably received by one of the fitting body or the drive nut.

The present invention further relates to a fitting assembly installation including a first engagement indicator member adapted to engage a second engagement indicator member for indicating a correct installation of the fitting assembly installation has been achieved by hand and without tools or gauges. The fitting assembly installation includes the first engagement indicator member having a first body having a geometry adapted to be one of rotatably received or non-rotatably received by one of a fitting body or a threaded drive nut, and the second engagement indicator member having a second body having a geometry adapted to be the other one of rotatably received or non-rotatably received by the other one of the fitting body or the drive nut.

The present invention yet further relates to a method of performing a correct installation of the fitting assembly without tools or gages, including providing a first engagement indicator member rotatably received or non-rotatably received by one of a fitting body or a threaded drive nut, and providing a second engagement indicator member being the other of rotatably received or non-rotatably received by the other one of the fitting body or the drive nut. The method further includes directing a first ferrule over an outer diameter of a tube, the first ferrule having a first driven end and a first driving end. The method further includes directing the tube inside the fitting body with the first engagement indicator member and the second engagement indicator member facing each other. The method further includes rotating the drive nut relative to the fitting body, the drive nut comprising a drive surface engaging the first driven end of the first ferrule, the first driving end engaging the outer diameter of the tube and the fitting body during assembly of the fitting assembly. In response to sufficiently rotating the drive nut relative to the fitting body by hand, the one of the first engagement indicator member or the second engagement indicator member rotatably received by the one of the fitting body or the drive nut becomes rotatably engaged with the other of the first engagement indicator member or the second engagement indicator member.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a cross section of an exemplary fitting assembly.
FIG. 2 is an upper perspective view of an exemplary engagement indicator member of the fitting assembly of FIG. 1.
FIG. 3 is an upper perspective view of an exemplary engagement indicator member of the fitting assembly of FIG. 1.

Wherever possible, the same reference numbers will be used throughout the drawings to refer to the same or like parts.

### DETAILED DESCRIPTION OF THE INVENTION

The present invention relates to a novel arrangement for a ferruled-type compression fitting assembly, such as a dual ferrule compression fitting assembly that provides an indication of a proper or correct installation of the fitting assembly by hand and without tools or gauges, essentially eliminating the need for inspection and post-inspection associated with the assembly or installation of fitting assemblies.

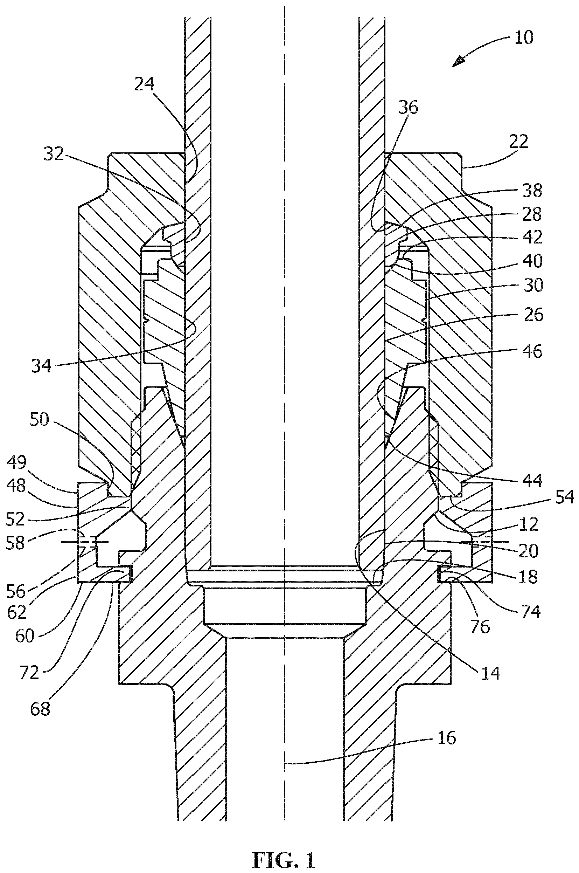

As shown in FIG. 1, an exemplary dual ferruled-type compression fitting of a tube fitting assembly 10 is comprised of a receptacle or fitting body 12 including a bore 14 having a longitudinal axis 16 and a seat 18 for receiving a tube 20 therein. A threaded drive nut 22 has an opening 24 that is received by or slidably received over an outer diameter or outer surface 26 of tube 20. Similarly, a rear ferrule or first ferrule 28 and a front ferrule or second ferrule 30 have respective openings 32, 34 that are each also received by or slidably received over the outer diameter or outer surface 26 of tube 20. Once drive nut 22 and ferrules 28, 30 have been installed on the end of tube 20, the end of the tube is inserted into fitting body 12. The fitting connection or assembly of the tube fitting assembly 10 is achieved by threadedly engaging drive nut 22 and fitting body 12. That is, once threadedly engaged, in response to sufficient relative rotational movement in one direction of drive nut 22 about axis 16 relative to fitting body 12, a specific axial compression pattern results, in which a drive nut surface 36 engages a driven end 38 of first (rear) ferrule 28, a driving end 40 of first (rear) ferrule 28 engages a driven end 42 of second (front) ferrule 30, a driving end 44 of second (front) ferrule 30 engages a surface 46 of fitting body 12 and outer surface 26 of tube 20, thereby preventing leakage of media from the end of the tube to exterior of the fitting assembly, or inadvertent removal of the tube from the fitting body. FIG. 1 is directed to a female nut construction that assembles into a male body thread. In one embodiment, the tube fitting assembly utilizes a male nut construction that assembles into a female threaded body and operates in a similar manner as tube fitting assembly 10, and is not further discussed.

In one embodiment, ferruled-type compression fitting of the tube fitting assembly 10 may be a single ferruled-type compression fitting, which would operate in a manner similar to that of the dual ferruled-type compression fitting previously discussed in FIG. 1, but without first ferrule 28.

The operation of exemplary dual compression ferruled-type fitting assembly 10 is further discussed in Applicant's US Appl. Ser. No. 15/971,427 titled Tube Fitting Assembly, which is incorporated by reference in its entirety.

FIG. 1 further shows an engagement indicator member 48 that defines an annulus. Engagement indicator member 48 includes a body 49 having a recess 50 that is non-rotatably received by corresponding surfaces 52, 54 of drive nut 22. That is, the diameter of recess 50 of engagement indicator member 48 and the diameter of corresponding surface 52 of drive nut 22 form an interference fit, with surface 54 of drive nut 22 controlling the position of engagement indicator member 48 relative to drive nut 22 along axis 16. In one embodiment, engagement indicator member 48 and drive nut 22 are of unitary or one-piece construction. In one embodiment, recess 50 may be rotatably received by corresponding surfaces 52, 54 of drive nut 22, or stated another way, for this embodiment, recess 50 and corresponding surfaces 52, 54 form a sliding non-interference fit.

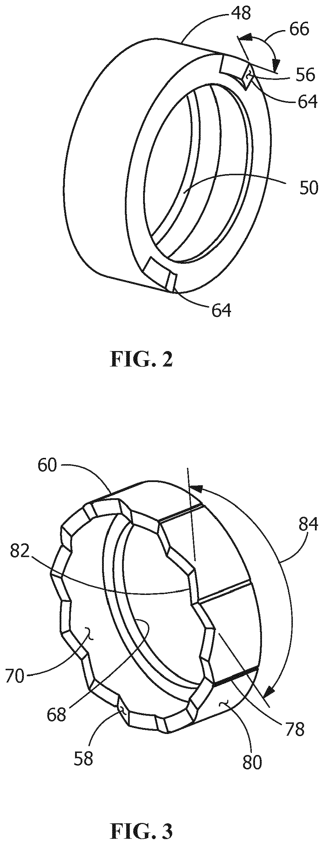

As further shown in FIG. 1, an end of engagement indicator member 48 facing away from drive nut 22 includes an engagement surface 56 for rotatably engaging a corresponding engagement surface 58 of an engagement indicator member 60 when a proper or correct installation has been achieved for fitting assembly 10. As shown in FIG. 2, engagement surface 56 includes a pair of diametrically opposed protrusions 64, such as V-shaped protrusions. In other words, the pair of protrusions are positioned 180 degrees apart from each other. In one embodiment, more than two protrusions 64 may be used, with the protrusions preferably evenly spaced apart from one another. As shown, corresponding surfaces of a protrusion 64 defines of supplementary angle 66. In one embodiment, angle 66 is approximately 120 degrees.

FIG. 1 further shows engagement indicator member 60 that defines an annulus. Engagement indicator member 60 includes a body 62 having a retention feature 68. In one embodiment, such as shown in FIG. 3, retention feature 68 is as an inwardly directed lip along the periphery of an inner surface 70 of engagement indicator member 60 that is rotatably secured in groove 72 (FIG. 1) of fitting body 12 (FIG. 1). In one embodiment, retention feature 68 extends at least partially along inner surface 70 of engagement indicator member 60. In one embodiment, a plurality of spaced apart retention features 68 extend at least partially along inner surface 70 of engagement indicator member 60. In one embodiment, engagement indicator member 60 and fitting body 12 are of unitary or one-piece construction. In one embodiment, engagement indicator member 60 may be non-rotatably received by a recess defined by surfaces 74, 76 of fitting body 12. For example, similar to engagement indicator member 48, surface 70 (FIG. 3) of engagement indicator member 60 may form an interference fit with corresponding surface 74 of fitting body 12, in the absence of groove 72. As further shown in FIG. 3, and indicia 78, such as lines, is formed in an outer surface 80 an outer surface 78 for indicating or easily discerning rotational movement.

It is to be understood that either of engagement indicator member 48 or engagement indicator member 60 may be rotatably received by drive nut 22 or fitting body 12, and that either of engagement indicator member 48 or engagement indicator member 60 may be non-rotatably received by drive nut 22 or fitting body 12, so long as only one of engagement indicator members 48, 60 is rotatably received, and only one of engagement indicator members 48, 60 is non-rotatably received. Stated another way, if engagement indicator member 48 is non-rotatably received by drive nut 22, then engagement indicator member 60 is rotatably received by fitting body 12, or if engagement indicator member 48 is rotatably received by drive nut 22, an engagement indicator member 60 is non-rotatably received by fitting body 12.

As further shown in FIG. 3, an end of engagement indicator member 60 facing away from surface 76 of fitting body 12 includes an engagement surface 58 for rotatably engaging a corresponding engagement surface 56 (FIG. 1) of engagement indicator member 60 (FIG. 1) when a proper or correct installation has been achieved for fitting assembly 10 (FIG. 1). As shown in FIG. 3, engagement surface 58 includes a plurality of diametrically opposed protrusions 82, such as V-shaped protrusions. As shown, corresponding surfaces of a single protrusion 82 defines of supplementary angle 84. In one embodiment, angle 84 is approximately 120 degrees.

In one embodiment, engagement indicator members 48, 60 may be composed of plastic. In one embodiment, engagement indicator members 48, 60 have a color corresponding to a material composition, for example, white for 316 stainless steel, green for 254 SMo alloys, blue for titanium alloys, etc.

In one embodiment, if the components of fitting assembly 10 (FIG. 10) have been installed correctly, in response to additional rotation of drive nut 22 relative to fitting body 12 in a "tightening" direction or rotational direction urging drive nut 22 and fitting body 12 toward one another, engagement surfaces 56, 58 of respective engagement indicator members 48, 60 are sized to rotatably engage each other when drive nut 22 and fitting body 12 are approximately 1 1/4 turns from "finger tight." That is, the one engagement indicator member of engagement indicator members 48, 60 that is rotatably received by one of drive nut 22 and fitting body 12 will begin to rotate in unison with the other indicator member of engagement indicator members 48, 60 that is non-rotatably received by the other of drive unit 22 and fitting body 12 in response to an interference or engagement or rotatable engagement between respective engagement surfaces 56, 58.

While the invention has been described with reference to a preferred embodiment, it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A fitting assembly comprising:
a fitting body for receiving a tube having an outer diameter;
a threaded drive nut comprising a drive surface and receivable over the outer diameter of the tube;
a first ferrule receivable over the outer diameter of the tube, the first ferrule having a first driven end and a first driving end;
a second ferrule receivable over the outer diameter of the tube, the second ferrule having a second driven end and a second driving end;
wherein the drive nut surface engaging the first driven end of the first ferrule, the first driving end engaging the second driven end of the second ferrule, and the second driving end engaging the outer diameter of the tube and the fitting body during assembly of the fitting assembly; and
an engagement indicator member adapted to engage a corresponding engagement indicator member for indicating a correct installation of the fitting assembly by hand and without tools or gauges, the engagement indicator member having a body having a geometry adapted to be rotatably received or non-rotatably received by one of the fitting body or the drive nut.

2. The fitting assembly of claim 1, wherein the engagement indicator member is an annulus.

3. The fitting assembly of claim 1 or 2, wherein the engagement indicator member includes a retention feature, in particular wherein the retention feature is an inwardly directed lip extending at least partially along an inner surface of the engagement indicator member.

4. The fitting assembly of any of the preceding claims, wherein the engagement indicator member includes indicia formed in an outer surface for indicating rotational movement.

5. The fitting assembly of any of the preceding claims, wherein an end of the engagement indicator member facing away from the fitting body or the drive nut has an engagement surface.

6. The fitting assembly of claim 5, wherein the engagement surface includes at least two V-shaped protrusions, in particular wherein the at least two V-shaped protrusions are positioned 180 degrees apart.

7. The fitting assembly of claim 6, wherein an angle between surfaces of a V-shaped protrusion of the at least two V-shaped protrusions defines a supplementary angle, in particular wherein the supplementary angle is approximately 120 degrees.

8. The fitting assembly of any of the preceding claims, wherein the engagement indicator member and the one of the fitting body or the drive unit are one piece.

9. The fitting assembly of any of the preceding claims, wherein the engagement indicator member has a color corresponding to a material composition of the engagement indicator member.

10. A fitting assembly installation comprising:
a first engagement indicator member adapted to engage a second engagement indicator member for indicating a correct installation of the fitting assembly installation has been achieved by hand and without tools or gauges, the first engagement indicator member having a first body having a geometry adapted to be one of rotatably received or non-rotatably received by one of a fitting body or a threaded drive nut, the second engagement indicator member having a second body having a geometry adapted to be the other one of rotatably received or non-rotatably received by the other one of the fitting body or the drive nut.

11. The fitting assembly installation of claim 10, further comprises:
the fitting body for receiving a tube having an outer diameter;
the drive nut comprising a drive surface and receivable over the outer diameter of the tube;
a first ferrule receivable over the outer diameter of the tube, the first ferrule having a first driven end and a first driving end; and
a second ferrule receivable over the outer diameter of the tube, the second ferrule having a second driven end and a second driving end;
wherein the drive nut surface engaging the first driven end of the first ferrule, the first driving end engaging the second driven end of the second ferrule, and the second driving end engaging the outer diameter of the tube and the fitting body during assembly of the fitting assembly.

12. The fitting assembly installation of claim 10 or 11, further comprises:
the fitting body for receiving a tube having an outer diameter;
the drive nut comprising a drive surface and receivable over the outer diameter of the tube;
a first ferrule receivable over the outer diameter of the tube, the first ferrule having a first driven end and a first driving end; and
wherein the drive nut surface engaging the first driven end of the first ferrule, the first driving end engaging the outer diameter of the tube and the fitting body during assembly of the fitting assembly.

13. The fitting assembly installation of any of claims 10 to 12, wherein an end of the engagement indicator member facing away from the fitting body or the drive nut has an engagement surface including at least two V-shaped protrusions, in particular wherein the at least two V-shaped protrusions are positioned 180 degrees apart, particularly wherein an angle between surfaces of a V-shaped protrusion of the at least two V-shaped protrusions defines a supplementary angle, in particular wherein the supplementary angle is approximately 120 degrees.

14. The fitting assembly installation of any of claims 10 to 13, wherein the engagement indicator member and the one of the fitting body or the drive unit are one piece.

15. A method of performing a correct installation of the fitting assembly without tools or gages, comprising:
providing a first engagement indicator member rotatably received or non-rotatably received by one of a fitting body or a threaded drive nut;
providing a second engagement indicator member being the other of rotatably received or non-rotatably received by the other one of the fitting body or the drive nut;
directing a first ferrule over an outer diameter of a tube, the first ferrule having a first driven end and a first driving end;
directing the tube inside the fitting body with the first engagement indicator member and the second engagement indicator member facing each other; and
rotating the drive nut relative to the fitting body, the drive nut comprising a drive surface engaging the first driven end of the first ferrule, the first driving end engaging the outer diameter of the tube and the fitting body during assembly of the fitting assembly;
wherein in response to sufficiently rotating the drive nut relative to the fitting body by hand, the one of the first engagement indicator member or the second engagement indicator member rotatably received by the one of the fitting body or the drive nut becomes rotatably engaged with the other of the first engagement indicator member or the second engagement indicator member.
